# EUROPEAN PATENT APPLICATION

(11) **EP 4 815 072 A1**
(43) Date of publication of application: **30.09.2026**
(21) Application number: 25165655.9
(22) Date of filing: 24.03.2025
(51) Int. Cl.: H01M 8/04082, H01M 8/18

(54) **MEMBRANE-LESS REDOX FLOW BATTERY AND METHOD FOR OPERATING THE BATTERY**

(71) Applicant: Unbound Potential AG, 8800 Thalwil (CH)
(72) Inventor: TAYLOR, David Phillipp, 8800 Thalwil (CH); PLATEK-MIELCZAREK, Anetta, 4053 Basel (CH); LYONS, Alexandra Jil Alicia, 8003 Zürich (CH); JUNKER, Moritz, 8152 Opfikon (CH); SINGH, Gaurav, 8048 Zürich (CH); PARATORE, Federico, 8005 Zürich (CH)
(74) Representative: Clerc, Natalia

(57) **Abstract**

A membrane-less redox flow battery comprises a reaction chamber (100), a first electrolyte and a second electrolyte, and at least one tank. The first electrolyte and the second electrolyte are immiscible with each other. The first electrolyte has a first density, and the second electrolyte has a second density, wherein the first density is higher than the second density. The first electrolyte forms a bottom phase (7) within the reaction chamber (100) and the second electrolyte forms a top phase (8) within the reaction chamber (100). The top phase (8) lies on top of the bottom phase (7), the top phase (8) and the bottom phase (7) forming a liquid interface (9) between them and the top phase (8) and the bottom phase (7) flow in horizontal direction through the reaction chamber (100). The reaction chamber (100) comprises at least one outlet (120, 121) through which the bottom phase (7) and the top phase (7) can exit the reaction chamber (100) and enter the tank. The tank is a separation tank (2) for separating the bottom phase (7) from the top phase (8) by gravity.

## Description

### TECHNICAL FIELD

The present invention relates to a membrane-less redox flow battery and a method for operating the membrane-less redox flow battery.

### PRIOR ART

A redox flow battery is an electrochemical storage device in which electrolytes containing dissolved redox-active species flow through a reaction chamber comprising at least one cell where chemical energy is converted to electrical energy. The flow battery can be recharged by reversing the electron flow and restoring the potential electrical energy which is converted to chemical energy. The working fluids, i.e. the electrolytes, used in the redox flow batteries comprise redox-active species, which usually consist of dissolved inorganic or organic salts. The electrolytes are stored in large external tanks and are pumped through the reaction chamber. In the reaction chamber, the first and the second electrolyte are in contact with a first and second electrode respectively (i.e. an anode and a cathode) and undergo a redox reaction at different potentials catalyzed by the electrodes.

The name "redox" refers to chemical reduction and oxidation reactions through which energy is stored in the electrolytes, which flow through the reaction chamber of the battery during charge and discharge. The two electrolytes with different redox-active species undergo a redox reaction at different potentials catalyzed by the electrodes.

The energy storing electrolytes are usually stored outside the reaction chamber in reservoirs (tanks). The reservoirs and the reaction chamber are connected with each other by at least one fluidic circuit. A battery usually comprises at least one tank for each electrolyte and at least one reaction chamber, preferably a multiple of reaction chambers. "A multiple" means at least two, preferably three or more, up to hundreds or thousands. The chambers can be arranged in parallel or in series.

Since the electrolytes are stored externally to the reaction chamber and since large tanks can be used, the storage capacity can be easily scaled by increasing the size of the tanks. Since the volume of the electrolyte tanks and the number of reaction chambers can be changed, the amount of energy and power can be scaled independently from each other.

The two electrolytes, i.e. the anolyte and the catholyte, are usually separated by a separator, especially by an ion-selective membrane. The separator maintains electrical neutrality during operation and mitigates cross-over or cross-contamination of redox active species between catholyte and anolyte. EP 3 900 094 B1 discloses a redox flow battery comprising a separator between the two electrolytes.

The separator prevents the two electrolytes from mixing. However, such separators, especially the membranes, are quite expensive and they are prone to failure during operations. The failure of one separator in a multiple arrangement of cells (a stack) might cause the failure of the entire stack and thus require its replacement. This increases the costs for producing and maintaining such redox flow batteries.

Paula Navalpotro et al.: "A Membrane-Free Redox Flow Battery with Two Immiscible Redox Electrolytes", Angew. Chem. Int. Ed. 2017, 56,12460-12465, June 28, 2017, discloses a membrane-less redox flow battery using two immiscible fluids as electrolytes and electrodes at its top and bottom. Each electrolyte flows directly from the reaction chamber into its own tank. The liquid-liquid interface formed between the two phases takes over the role of the membrane. In this text the liquid-liquid interface is called liquid interface.

WO 2021/209585 A1 describes a membrane-less redox flow battery with immiscible electrolytes as well, wherein flow-through electrodes are used.

WO 2025/016911 shows a membrane-less redox battery comprising three liquid phases being immiscible between them, a catholyte, an anolyte and an intermediate liquid phase placed between catholyte and anolyte.

These batteries have the advantage of reduced production and maintenance costs compared with the batteries using ion-selective membrane and they are considered to ensure an increased performance. However, they work well in laboratory, but scaling up for commercial use is still a challenge. In addition, no solution for a separation of the two phases after the reaction which can be scaled-up and commercialized is provided.

WO 2024/208810 A1 describes a method to operate a membrane-less redox flow battery with immiscible electrolytes comprising the step of stabilizing a position of the liquid-liquid interface within the reaction chamber, wherein pressure boundary conditions are kept constant by using an overflow of at least one electrolyte.

### SUMMARY OF THE INVENTION

It is therefore an object of the invention to provide a membrane-less redox flow battery which is scalable and suitable for commercial use.

This object is achieved with a membrane-less redox flow battery and a method for operating the membrane-less redox flow battery having the features of claim 1 and claim 15, respectively.

The inventive membrane-less redox flow battery comprises a reaction chamber, a first electrolyte and a second electrolyte, and at least one tank. The first electrolyte and the second electrolyte are immiscible with each other. The first electrolyte has a first density, and the second electrolyte has a second density, wherein the first density is higher than the second density. The first electrolyte forms a bottom phase within the reaction chamber and the second electrolyte forms a top phase within the reaction chamber. The top phase lies on top of the bottom phase, the top phase and the bottom phase forming a liquid interface between them, and the top phase and the bottom phase flowing in horizontal direction through the reaction chamber. The reaction chamber comprises at least one outlet through which the bottom phase and the top phase can flow out of the reaction chamber into the tank. The tank is a separation tank for separating the bottom phase from the top phase by gravity.

The liquid interface is also called liquid-liquid interface in literature and in this text.

This separation tank enables an effective separation of the two electrolytes leaving the reaction chamber. Due to the different densities of the phases, the separation is performed by gravity. The phase with the higher density sinks to the bottom, the phase with the lower density raises to the top.

The once again separated two electrolytes can flow to additional tanks, wherein they leave the separation tank through tubes, which are arranged with their ends at different levels in the separation tank.

This battery can be easily scaled up for commercial use.

In some embodiments, pumps are present to pump the two electrolytes through the reaction chamber and/or into the separation tank and/or out of the separation tank into collections tanks collecting only one of the electrolytes each.

In preferred embodiments, the flow rates of the top phase and the bottom phase within the reaction chamber are not equal. Usually, the liquid interface moves during operation of the battery to be higher or lower than the exit of the reaction chamber.

In some embodiment, only the two electrolytes are present in the separation tank and the form a common liquid interface when separated. At least one outlet of the reaction chamber leads into a region of the separation tank, which lies within one phase region. I.e. either the bottom phase is guided into the region of the separation tank already filled with the top phase or vice versa.

In preferred embodiments, separation tank comprises a fluid which is immiscible with the first electrolyte and the second electrolyte, and which has a density which is between the first and the second density, the fluid forming a mid phase between the first electrolyte and the second electrolyte flowing into the tank, thereby separating the bottom phase and the top phase. The at least one outlet of the reaction tank leads into the separation tank at a place, where preferably the mid phase is located. In some embodiments, the bottom phase and the top phase leave the reaction chamber through the same outlet. In other embodiments, separate outlets for the bottom phase and the top phase from the reaction chamber are used. The use of the mid phase makes sure that the contact of the bottom phase and top phase is minimized after exiting the reaction chamber, thus minimizing cross-over and self-discharge of the redox-active species. In addition, preferably the mid phase should have a lower electrical conductivity compared to the top phase and the bottom phase to minimize parasitic current, also known as shunt currents, in the battery.

In some embodiments, the at least one outlet of the reaction chamber is connected with the separation tank by tubing. In other embodiments, the bottom phase and the top phase leaving the reaction chamber drip directly into the separation tank. In further embodiments, the bottom phase and the top phase leaving the reaction chamber drip directly into two collection tanks, each collection tank provided for one of the two phases. They are then directed into a separation tank if needed. In further embodiments, each phase leaving the reaction chamber flows through tubes into its specific collection tank and may then be forwarded into a separation tank if needed.

In preferred embodiments, the reaction chamber comprises at least one bottom phase outlet for the bottom phase and at least one top phase outlet for the top phase, the at least one bottom phase outlet and the at least one top phase outlet leading into the separation tank.

Preferably, the at least one bottom phase outlet and the at least one top phase outlet are arranged on the same side of the reaction chamber.

In preferred embodiments, the reaction chamber comprises a separator, for example a lip, located upstream of the at least one bottom phase outlet and the at least one top phase outlet and separating the bottom phase and the top phase flowing through the reaction chamber. The complete and/or the partial separation of the two phases prior the entering of the separation tank has the advantage to minimize the contact between the top phase and the bottom phase thus minimizing the cross-over and self-discharge of the redox-active species.

In case of complete separation, i.e. no fraction of the bottom phase is present in the top phase outlet and not fraction of the top phase is present in the bottom phase outlet, the two separated phases can be routed directly into the collection tanks.

In case of partial separation, which can be due to possible fluctuation of the liquid velocities of the top and bottom phases in the chamber, or given by unwanted pressure oscillations in the pumps or other external factors, including variations in temperatures, and redox-active species concentrations, the preferred embodiment consists in routing the reaction chamber outlets of the bottom phase and the top phase in the separation tank, where the separation is completed by gravity.

Preferably, the bottom phase and the top phase flow in the same direction within the reaction chamber.

In preferred embodiments, the battery comprises a first collection tank for the bottom phase and a second collection tank for the top phase, wherein each is connected with the separation tank via a separate tubing. The collection tanks enable storing of the two electrolytes for recirculating them back to the reaction chamber.

Preferably, the reaction chamber enables a laminar flow of the bottom phase and the top phase flowing through the reaction chamber. This ensures a stable liquid interface between the two phases.

In preferred embodiments, the reaction chamber comprises at least one flow channel plate enabling a laminar flow of the bottom phase and the top phase flowing through the reaction chamber. Multiple flow channel plates can be stacked on top of each other with mid plates in between them, enabling a multiple of laminar flows contacting electrodes arranged within the stack. This enables scaling up the battery system from a laboratory device to an enlarged device for commercial use.

Preferably, the at least one flow channel plate comprises the separator, for example a lip. The separator at least separates one of the incoming electrolytes or the outgoing electrolytes. Preferably both, the incoming and the outgoing electrolytes are separated by the flow channel plate, so that only within a middle region of the channel plate enables the two phases of the two electrolytes to lay on top of each other and contacting each other at liquid interface.

Preferably, the flow channel plate comprises an open window within the flow channel plate, wherein the bottom phase and the top phase contact each other when flowing along this window. Preferably, a pinning structure is arranged within the window. The pinning structure is for example a lip, which at least partially surround the interior wall of the window, and which extends into the window. Preferably, the lip is formed by a tapering of the thickness of the surrounding plate. The same lip can act as a separator and as a pinning structure. In addition or alternatively, the pinning structure is a grid arranged within the interface window. The grid is not to be mistaken with a membrane, since there is still a liquid interface formed by the top and the bottom phase.

Preferably, the plate comprises recesses on the upper and lower side of the plate, the recessing forming channels for the top phase and the bottom phase, thereby separating the two phases. Preferably, the recesses are present upstream of the window and downstream of the window, i.e. they are intersected by the window. The recesses are preferably connected with upstream inlets for the two electrolytes and/or downstream outlets for the electrolytes.

In preferred embodiment, the battery comprises at least two flow channel plates stacked on top of each other, wherein a mid plate is arranged between them and wherein a top plate is arranged on the top of the stack and a bottom plate is arranged at the bottom of the stack.

In preferred embodiments, the battery comprises a first tube with a first tube end arranged in a bottom region of the separation tank and a second tube arranged in a bottom region of the separation tank. This enables to lead the separated bottom phase and top phase from the separation tank into additional tanks or into appropriate tubing.

The inventive method for operating the above described battery comprises the steps of
- introducing the first electrolyte into the reaction chamber through a first inlet,
- introducing the second electrolyte into the reaction chamber through a second inlet,
- letting the bottom phase formed by the first electrolyte and the top phase formed by the second electrolyte flowing in horizontal direction through the reaction chamber,
- letting the bottom phase and the top phase flow or drip out of the reaction chamber through the at least one outlet into the separation tank and
- separating the bottom phase and the top phase within the separation tank using gravity.

This method enables a secure, stable and commercial use of the batteries.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Figure 1: shows a cross-section of a schematically illustrated redox flow battery with immiscible fluids according to a first embodiment of the invention;
- Figure 2: shows a cross-section of a schematically illustrated a redox flow battery with immiscible fluids according to a second embodiment of the invention;
- Figure 3: shows a cross-section of a schematically illustrated a redox flow battery with immiscible fluids according to a third embodiment of the invention;
- Figure 4: shows a second schematically representation of the embodiment according to figure 3;
- Figure 5: shows a cross-section of a schematically illustrated a redox flow battery with immiscible fluids according to a fourth embodiment of the invention;
- Figure 6: shows a second schematically representation of the embodiment according to figure 5;
- Figure 7: shows a flow channel plate according a first embodiment of the invention in a perspective view from the top;
- Figure 8: shows a top view of the flow channel plate of figure 7;
- Figure 9: shows a bottom view of the flow channel plate of figure 7;
- Figure 10a: shows a cell of a reaction chamber with the flow channel plate of figure 7 in an exploded view;
- Figure 10b: shows a cross-sectional view of a membrane-less reaction chamber without the lip in a schematic representation
- Figure 10c: shows a cross-sectional view of an inventive membrane-less reaction chamber with the lip in a schematic representation;
- Figure 11: shows a top view of the flow channel plate of figure 7;
- Figure 12a: shows a cross-section through A-A of the flow channel plate of figure 11;
- Figure 12b: shows a cross-section through B-B of the flow channel plate of figure 11;
- Figure 12c: shows an enlarged part of the plate of figure 12b;
- Figure 13: shows a top view of the flow channel plate of figure 7;
- Figure 14: shows a cross-section through C-C of the flow channel plate of figure 13;
- Figure 15: shows the cross-section through the flow channel plate of figure 14 and two collection tanks;
- Figure 16: shows the cross-section through the flow channel plate of figure 13, a separation tank and two collection tanks according to an embodiment of the invention;
- Figure 17a: shows a top view of the flow channel plate of figure 7;
- Figure 17b: shows a cross-section of stacked cells and two collection tanks of a redox flow battery, wherein the cross-section is taken along A-A of figure 17a;
- Figure 17c: shows a partial exploded view of the stacked cells of figure 17b, wherein it is are cut along A-A of figure 17a;
- Figure 17d: shows another partial exploded view of the stacked cells of figure 17c with their entire length;
- Figure 18: shows at top view of the flow channel plate of figure 7;
- Figure 19: shows a cross-section through E-E of the flow channel plate of figure 18;
- Figure 20: shows an enlarged view of a part F of the cross-section of figure 19;
- Figure 21: shows a first variant of the enlarged view figure 20;
- Figure 22: shows a second variant of the enlarged view figure 20;
- Figure 23: shows a third variant of the enlarged view figure 20;
- Figure 24a: shows a flow channel plate according a second embodiment of the invention in a perspective view from the top;
- Figure 24b: shows the flow channel plate of figure 24a in a perspective view from the bottom;
- Figure 25: shows the flow channel plate of figure 24 in a top view;
- Figure 26: shows a cross-section through G-G of the flow channel plate of figure 25;
- Figure 27: shows a flow channel plate according a third embodiment of the invention in a perspective view;
- Figure 28: shows the flow channel plate of figure 27 in a top view;
- Figure 29: shows the flow channel plate of figure 28 in a front view in direction A-A and two collection tanks, and
- Figure 30: shows a perspective view a flow channel plate according to a further embodiment of the invention.

### DESCRIPTION OF PREFERRED EMBODIMENTS

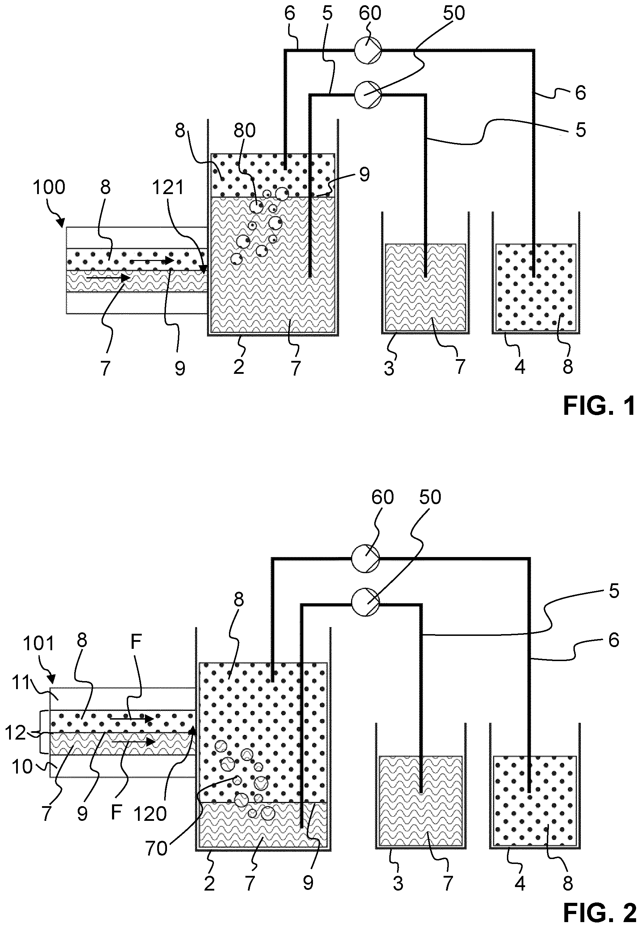

Figures 1 to 6 schematically show six embodiments of an inventive redox flow battery. The sizes and proportions of the components of the battery shown in figures 1 to 7 do not correspond to real sizes and proportions.

Each figure shows a battery comprising a reaction chamber 100, 101, 102, 103, 104 being at least one membrane-less flow cell. The flow cell comprises a top plate 10, a bottom plate 11 and a flow channel plate 12, 14, 15 located between the top plate 10 and the bottom plate 11. The flow channel plate 12, 14, 15 enables a horizontal flow of two electrolytes, i.e. an anolyte and a catholyte, through the reaction chamber. The two electrolytes form a top phase and a bottom phase, wherein the top phase floats on top of the bottom phase.

Preferably, no additional fluid or medium is located between the two electrolytes. The electrolytes used in the battery are fluids which are immiscible with each other and insoluble with each other. They have different densities, so that they form two phases laying one above the other and forming a separation line between them, wherein the separation line extends in horizontal direction.

The electrolytes are preferably liquids. Preferably, they are non-polar liquids, or an aqueous solution containing salts (e.g. sodium sulfate, sodium phosphate) and/or polymers (e.g. Poly Ethylene Glycol) and/or water-soluble ionic liquids (e.g. imidazolium ionic liquid and phosphonium ionic liquid). Preferably, the top electrolyte is an aqueous solution comprising Poly Ethylene Glycol, and the bottom electrolyte is an aqueous solution comprising sodium sulfate.

In the figures, a bottom phase formed by a first of the two electrolytes is marked with reference number 7, a top phase of a second of the two electrolytes is marked with reference number 8. The separation line or liquid interface formed by the bottom phase 7 and the top phase 8 in between them is marked with reference number 9. The liquid of the bottom phase 7 has a higher density than the liquid of the top phase 8.

In figures 1 to 6, the liquid interface 9 extends through the length of the reaction chamber 100, 101, 102, 103, 104. This may not be the case, especially when reaction chambers with cells as described in more detail later in this text will be used.

The reaction chamber 100, 101, 102, 103, 104 also comprises electrodes, i.e. an anode and a cathode. These are not shown in the figures 1 to 6. They may be located at the bottom of the bottom phase 7 and on the top of the top phase 8 or each of the electrodes may be located within the bottom phase 7 and the top phase 8 respectively. The function of the electrodes is to facilitate electron transfer between the redox-active species contained in the top phase and in the bottom phase and the external electrical circuit (not shown). Therefore, the electrodes preferably exhibit high conductivity and high reactivity toward the redox-active species. Preferred electrode materials include carbon felt, carbon paper, carbon cloth, graphite, stainless steel, titanium, and glassy carbon.

The reaction chamber 100, 101, 102, 103, 104 comprises a bottom phase inlet, a top phase inlet, a bottom phase outlet and a top phase outlet, so that both phases 7, 8 can flow through the flow cell of the reaction chamber. The flow is preferably a laminar flow. Preferably, the inlets are separate from each other so that the bottom and the top phase 7, 8 are guided separately into the cell. In other variants, they are guided into the cell through a common inlet. Preferably, the outlets are separate from each other so that the bottom and the top phase 7, 8 are let out separately from the cell. In other variants, they are let out from the cell through a common outlet.

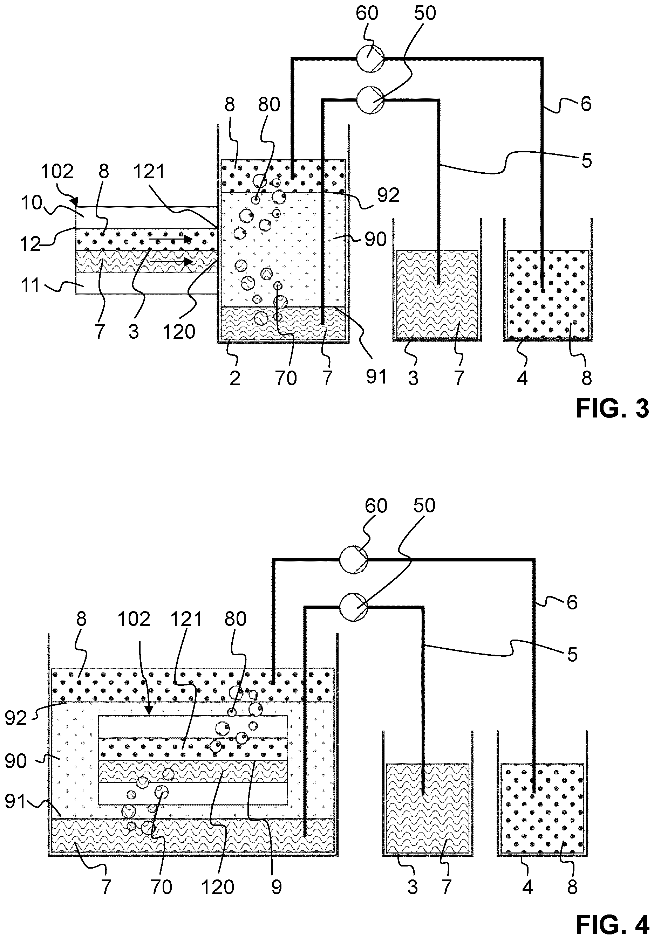

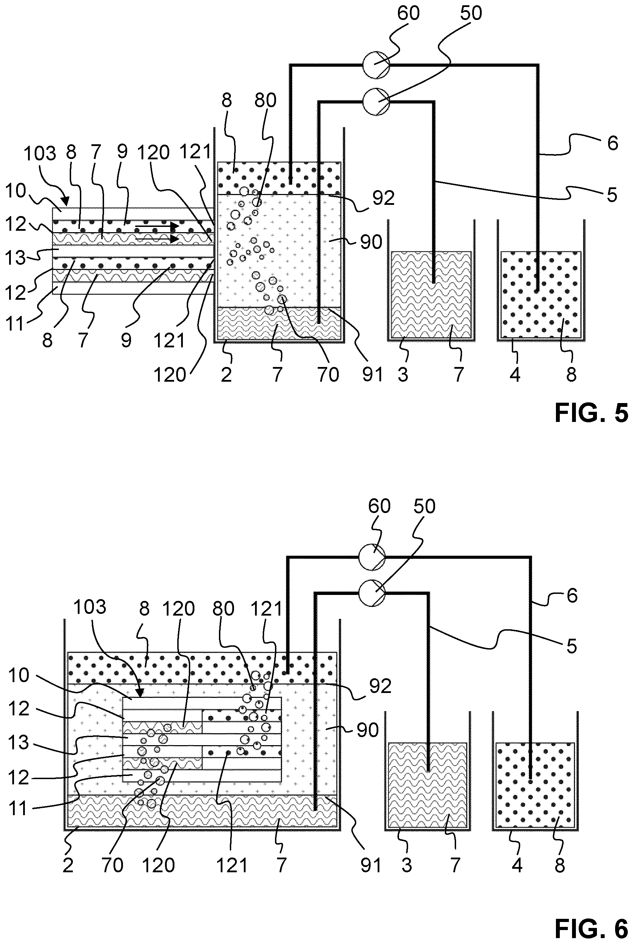

In figures 1 to 6, the inlets are not shown and only the outlet which is placed specially is marked with a reference number. The main flow direction through the reaction chamber cell between the inlets to the outlets of figures 1 to 3 and figure 5 is shown with an arrow. Figure 4 shows the same arrangement as figure 3 in another schematic representation, similar to a cross-section through the left-hand side wall of the separation tank 2 shown in figure 3. It shows the outlets of the reaction chamber 102 into the separation tank 2, wherein the reaction chamber 102 is arranged behind the separation tank 2. Figure 6 shows an according schematic representation, similar to a cross-section of the arrangement according to figure 5. Preferably, the main flow direction of the top phase and bottom phase is in the same direction.

The battery also comprises at least one separation tank 2, at least a first collection tank 3 for the bottom phase 7 and at least one collection tank 4 for the top phase 8. Outlets for the bottom phase 7 and the top phase 8 lead into the separation tank 2, so that the bottom phase 7 and the top phase 8 can flow from the reaction chamber. Not all outlets are shown or marked with reference numbers in figures 1 to 6.

A first tubing 5 connects the separation tank 2 with the first collection tank 3 enabling the bottom phase 7 to flow from the separation tank 2 into the first collection tank 3. Preferably, a first pump 50 is present for conveying the bottom phase 7. The first pump 50 is preferably located between the two tanks 2, 3 most preferred it is located in the first tubing 5.

A second tubing 6 connects the separation tank 2 with the second collection tank 4 enabling the top phase 8 to flow from the separation tank 2 into the second collection tank 4. Preferably, a second pump 60 is present for conveying the top phase 8. The second pump 60 is preferably located between the two tanks 2, 4 most preferred it is located in the second tubing 6.

The fluids collecting in the two collection tanks 3, 4 can be reentered through the inlets into the reaction chamber 100, 101, 102, 103, 104 to form a bottom phase 7 and a top phase 8 in the reaction chamber again. The recirculation of the two electrolytes from the collection tanks 3, 4 to the reaction chamber 100, 101, 102, 103, 104, i.e. the at least one flow cell, is not shown in the figures.

In the first embodiment according to figure 1, the top phase outlet 121 is located such that it leads into the separation tank 2 in a region of the tank 2 which is filled with the bottom phase 7. Due to the lower density of the top phase 8, the top phase 8 within the separation tank 2 ascends to the top of the separation tank 2. This is shown in figure 1 with top phase bubbles 80.

The first tubing 5 leads from the region of the separation tank 2 filled the liquid from the bottom phase 7 to the first collection tank 3. The second tubing 6 leads from the region of the separation tank 2 filled with liquid from the top phase 7 to the second collection tank 4.

In the second embodiment according to figure 2, the bottom phase outlet 120 is located such that it leads into the separation tank 2 in a region of the tank 2 which is filled with the top phase 8. Due to the higher density of the bottom phase 7, the bottom phase 7 within the separation tank 2 sinks to the bottom of the separation tank 2. This is shown in figure 2 with bottom phase bubbles 70.

Like in the first embodiment according to figure 1, the first tubing 5 leads from the region of the separation tank 2 filled the liquid from the bottom phase 7 to the first collection tank 3, and the second tubing 6 leads from the region of the separation tank 2 filled with liquid from the top phase 7 to the second collection tank 4.

In the third embodiment according to figures 3 and 4, a third phase is present in the separation tank 2, wherein this third phase is located between the bottom phase 7 and the top phase 8. This third phase is a mid phase 90, also called separation phase. This separation phase is a fluid, preferably a liquid. This mid phase 90 has a density, which is greater than the density of the top phase 8, but lower than the density of the bottom phase 7. The mid phase 90 is also immiscible and insoluble with the other two phases 7, 8. Ideally, the mid phase has an equal or lower electrical conductivity compared to the bottom phase and to the top phase, e.g. 5-fold, 10-fold, 100-fold, or 1000-fold, lower than the phase with the lowest conductivities, reducing the electrical shunt losses between the top and bottom phase, and thus increasing the efficiency of the battery. In addition, the mid phase has the role to minimize the time in which the top phase and the bottom phases are in contact, thus minimizing the cross-over and self-discharge of the redox-active species. The mid phase can be a third aqueous solution containing salts, polymers, and ionic liquid or it could be an organic phase, e.g. a silicon oil with a density which is greater than the density of the top phase 8, but lower than the density of the bottom phase 7. Preferably, the mid phase is silicon oil AR20 or a fluorinated silicon oil.

The bottom phase outlet 120 and the top phase outlet 121 both lead into the region of this mid phase 90 in the separation tank 2. Instead of two separate outlets for the two phases 7, 8, one combined outlet may be present. Preferably, there are two separate outlets. As can be seen in figure 3, when looking at the bottom phase bubbles 70 and the top phase bubbles 80, the fluid of the bottom phase 7 sinks to the bottom and the fluid of the top phase 8 ascends to the top.

Within the separation tank 2, there are two liquid interfaces, a first liquid interface between the bottom phase 7 and the mid phase 90 being marked with the reference number 91, a second liquid interface between the mid phase 90 and the top phase 8 being marked with the reference number 92.

The ends of the first and second tubing 5, 6 are located in the regions of the respective phases 7, 8, so that the fluid of the bottom phase 7 and the fluid of the top phase 8, usually liquids, can be pumped into the respective collection tanks 3,4 and can be reentered into the reaction chamber 102 again.

The fourth embodiment according to figures 5 and 6 is a further development of the third embodiment according to figure 3. Instead of a reaction chamber comprising a single cell, a reaction chamber in the form of a stack of cells is present. Figure 5 shows two pairs of bottom and top phases 7, 8. However, more than two can be present, which are preferably fluidically connected in parallel. The reaction chamber 103 comprises the top plate 10 on the top, the bottom plate 11 on the bottom, two or more flow channel plates 12 and a mid plate 13 between each neighboring flow channel plates 12. Preferably, the mid plate 13 comprises an electrode (not shown in the figure) that acts as a bipolar plate that is electrically conductive and that reacts with the redox-active species in the top phase of the lower flow channel plate 12 and in the bottom phase of the upper flow channel plate 12. The flow channel plates 12 and the at least one mid plate 13 lie between the top plate 10 and the bottom plate 11.

The separation tank 2 comprises a mid phase 90 as described in the third embodiment. The tubing 5, 6 and the collection tanks 3, 4 are also the same as in the third embodiment.

Preferably, each flow channel plate 12 leads to an own outlet or to outlets 120, 121 dedicated to the bottom phase 7 and the top phase 8 individually. The individual outlet for each phase 7, 8 and for each flow channel plate 12 is preferred. In other embodiments, there is one common outlet from the reaction chamber 103 to the separation tank 2.

As in the third embodiment, the outlets lead into the region of the separation tank 2 filled with the mid phase. The bottom phase bubbles 70 and the top phase bubbles 80 within the separation tank 2 show that the fluids, preferably the liquids, are separated into three phases again.

This reaction chamber 104 is connected to the separation tank 2 which comprises not only the bottom phase 7 and the top phase 8, but also a mid phase 90 between the two phases 7, 8. Once again, each flow channel plate 12 leads to outlets 120, 121 of the bottom phase 7 and the top phase 8, which lead into the region of the separation tank 2 filled with the mid phase 90. The bottom phase bubbles 70 and the top phase bubbles 80 within the separation tank 2 show that the fluids, preferably the liquids, are separated into three phases again.

The separation of the fluids may not provide bubbles as shown in figures 1 to 6. They have to be understood as symbolic for the separation dynamics which may occur.

The reaction chamber, especially the cells within the reaction chamber, can be formed in different ways. They may not comprise flow channel plates, but the guidance of the fluid may be solved in another way. Reaction chambers through which two electrolytes flow are known at least on laboratory level, as described in the introductory part of this text. Preferably, no membranes or mechanical dividers are used. However, in some embodiments, they may be present as well.

Figures 1 to 6 show the situations, when the battery is in operation. When the battery is assembled, the separation tank 2 has to be filled with the fluid of the two phases 7, 8 so that the fluid leaving the reaction chambers 100, 101, 102, 103, 104 enters into the phase levels as described above.

The batteries described with reference to figures 1 to 6 may be used with any type of reaction chambers comprising to flowing electrolyte phases, especially electrolyte phases flowing in horizontal direction and lying on top of each other. They are especially suitable for membrane-less redox battery reaction chambers with horizontally flowing phases. The flow control is for example achieved with pumps, such as peristaltic pumps, membrane-based pumps, or centrifugal pumps. In alternative the flow can be controlled by active pressure control and/or with gravity-driven pressure control acting directly on the top and bottom phases or acting on third phase being a liquid or a gas in contact with the top and/or bottom phases.

In the following, preferred cells of reaction chambers and especially preferred flow channel plates are described. They can be especially used for membrane-less reaction chambers.

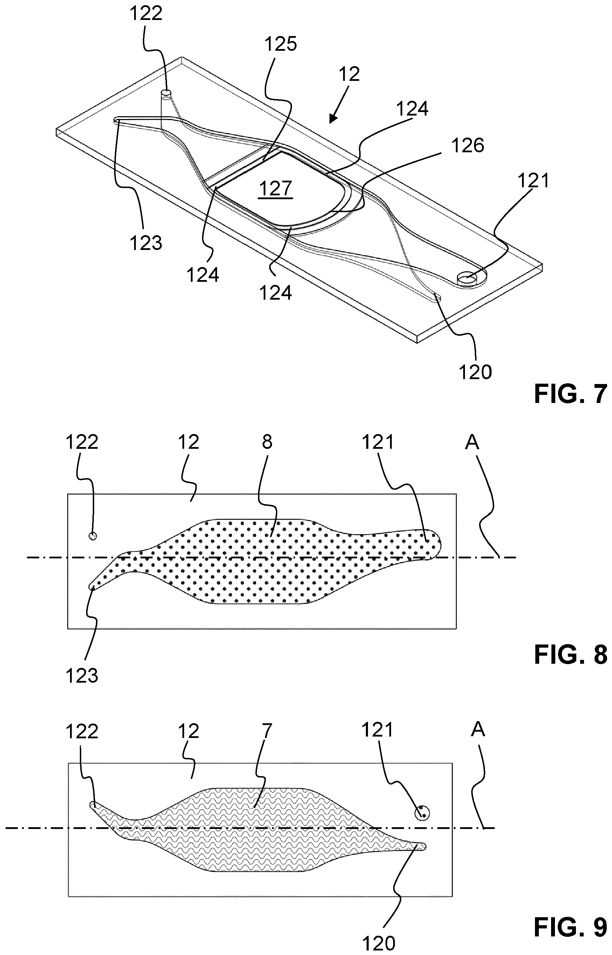

A first embodiment of a flow cell can be understood when looking at figures 7 to 14.

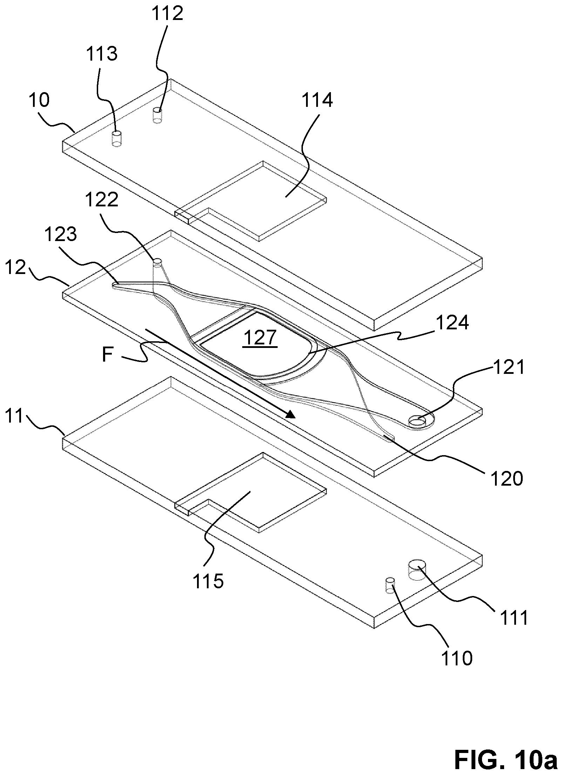

As shown in figure 10a, the cell comprises the top plate 10, the bottom plate 11 and the flow plate 12 between the top plate 10 and the bottom plate 11. Preferably, each plate 10, 11, 12 is made of one single piece. All plates are preferably made of the same material, preferably PMMA (Polymethyl methacrylate, also called acrylic glass). Other materials may be used as well, for example Polyethylene (PE), Polypropylene (PP), Polycarbonate (PC), Polyvinyl chloride (PVC), Acrylonitrile Butadiene Styrene (ABS). The material should preferably be chemical compatible with the electrolytes used and mechanically stable.

The plates 10, 11, 12 are preferably plane-parallel. They have preferably a rectangular shape, wherein other shapes can be used as well, such as oval shapes. The thickness of the flow channel plate 12 is about 4 mm. In other embodiments, especially when scaled-up, the thickness is about from 0.01 mm to 10 mm.

The size of the plates 10, 11, 12 is about 1 mm to 5000 mm in length, i.e. in the main flow direction, preferably between 100 mm and 1500 mm, and 0.1 mm to 5000 mm in width, i.e. perpendicular to the main flow direction, preferably between 10 mm and 1000 mm.

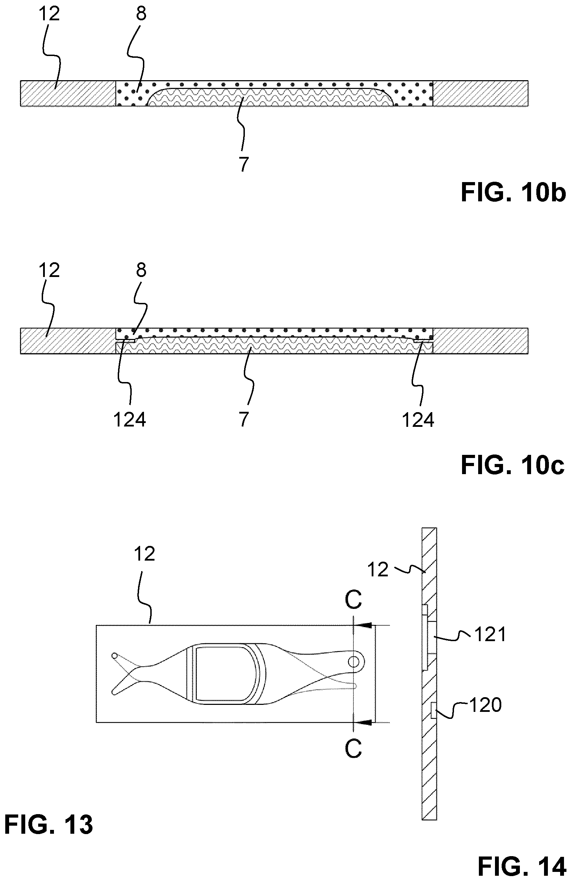

The top plate 10 and the bottom plate 11 comprise flat surfaces, preferably with no recesses or protrusions. Only through openings are present at an end of the plates 10, 11. In the top plate 10, a first through-opening forms a bottom phase entrance 112 and a second through-opening forms a top phase entrance 113. They are located at a first end of the top plate 10, in the drawing on the left-hand side. In the bottom plate 11, a first through-opening forms a bottom phase exit 110 and a second through-opening forms a top phase exit 111. They are located at a second end of the bottom plate 11, i.e. in flow direction (see arrow in figure 10) downstream to the entrances 112, 113 of the phases. This is in the drawing on the righthand side.

The bottom phase entrance 112, the top phase entrance 113 and the bottom phase exit 110 have preferably the same size of cross-sectional area. In other embodiments, the entrances and exits have different sizes. The top phase exit 111 has preferably a larger cross-sectional area than the other exit and the entrances when the viscosity of the top phase is larger than the viscosity of the bottom phase. This is because the pressure losses of the top and bottom phases through their respective exits need to be comparable or, ideally, equal. The relationship between pressure losses, fluid viscosities, and the cross-sectional dimensions of fluidic conduits is well-known for both circular and rectangular cross-sections.

The top plate 10 bears a first electrode, called top electrode 114. The bottom plate 11 bears a second electrode, called bottom electrode 115. The two electrodes 114, 115 are directed to the flow channel plate 12 arranged between the top and the bottom plate 10, 11. The top electrode 114 allows contact with the top phase 8 formed by one electrolyte flowing along the main flow direction defined by the flow channel plate 12. The bottom electrode 115 allows contact with the bottom phase 7 of the other electrolyte flowing also along the main flow direction defined by the flow channel plate 12.

The flow channel plate 12 comprises a main body with an upper side and a bottom side. The upper side comprises an upper recess and a bottom side with a bottom recess. The recesses have preferably a depth of 1.5 mm and when scaled up is about 0.1 mm to 2 mm. The depth might be adjusted and varied across the length of the cell depending on the fluid properties, mainly their viscosities.

The upper recess forms a channel for the top phase 8, i.e. the electrolyte flowing over the top surface of the flow channel plate 12, preferably as laminar flows. This channel is covered and closed by the bottom side of the top plate 10. The bottom recess forms a channel for the bottom phase 7, i.e. the electrolyte flowing over the bottom surface of the flow channel plate 12. This channel is covered and closed by the top side of the bottom plate 11.

The shape of the upper recess and therefore the shape of the channel provided for the top phase 8 from the top phase inlet 123 to the top phase outlet 121 is shown in figure 8. The shape of the bottom recess and therefore the shape of the channel provided for the bottom phase 7 from the bottom phase inlet 122 to the bottom phase outlet 120 is shown in figure 9.

Hidden lines, such as the recess in the bottom side of the flow channel plate 12 are shown in Figures 7 and 10 with thinner lines. Figure 7 shows the flow channel plate 12 in a top perspective view.

As can be seen in the combination of figures 7, 8 and 9, the upper recess defining the channel for the top phase 8 begins on a first side, near a first end of the flow channel plate 12, in a closed end. This closed end forms the top phase inlet opening 123. This upper recess extends first in an angle to the main flow direction and opens up into a middle part extending parallel to the main flow direction and parallel to a middle longitudinal axis A of the flow channel plate 12. In the middle part, when the upper recess has reached its largest width, the recess changes into a through opening, forming an interface window 127. The upper recess and therefore the top phase channel then tappers again and reaches at its end a through opening, which forms the top phase outlet 121. This end is near the second end of the flow channel plate 12 as can be seen in figures 13 and 14. The top phase outlet 121 is placed at a distance to a middle longitudinal axis A of the flow channel plate 12. The section of the upper recess extending from the interface window 127 to the top phase outlet 121 has preferably the larger width than the section of the upper recess extending from the top phase inlet 123 to the interface window 127. The two inlets 122, 123 and the two entrances 112, 113 as well as the bottom phase exit 110 and the bottom phase outlet 120 have preferably sizes that ensure a flow ratio between the top phase and the bottom phase according to their viscosities.

The larger widths of the top phase outlet 121 and of the corresponding top phase exit 111 reduces the pressure losses associated with the higher viscosity of the top phase. Preferably, the velocities of the two phases are also tuned in accordance with their viscosity difference, with the top phase flowing slower than the bottom phase.

The shape of the upper recess defining the flow channel of the upper phase 8, i.e. the phase with the lower density, is shaped to ensure a smooth transition between varying widths and to avoid sharp corners. Sharp corners in the channel might cause vortices and unstable flow conditions.

As can be seen in the combination of figures 7, 8 and 9 as well, the bottom recess defining the channel for the bottom phase 7 begins on a first side, near a first end of the flow channel plate 12, with a through-opening. This through-opening forms the bottom phase inlet opening 122. This bottom recess extends first in an angle to the main flow direction and opens up into a middle part extending parallel to the main flow direction and parallel to the longitudinal axis A of the flow channel plate 12. In the middle part, when the bottom recess has reached its largest width, the recess changes into a through opening, forming the interface window 127. The bottom recess and therefore the bottom phase channel then tappers again and reaches at its end a closed end, which forms the bottom phase outlet 120. This end is near the second end of the flow channel plate 12, as can be seen in figure 13 and 14. The bottom phase outlet 120 is placed at a distance to the middle longitudinal axis A of the flow channel plate 12. The section of the bottom recess extending from the interface window 127 to the bottom phase outlet 120 has the larger width than the section of the bottom recess extending from the bottom phase inlet 122 to the interface window 127. The recesses of the top and bottom phases extending from the inlets 123 and 122 to the interface windows are designed to ensure an equal flow velocity across the width of the of the interface window 127. The recesses of the top and bottom phases extending from the window interface 127 to their respective outlets 121 and 120 are designed to have equal pressure losses across these sections of the top and bottom phases according to their viscosities.

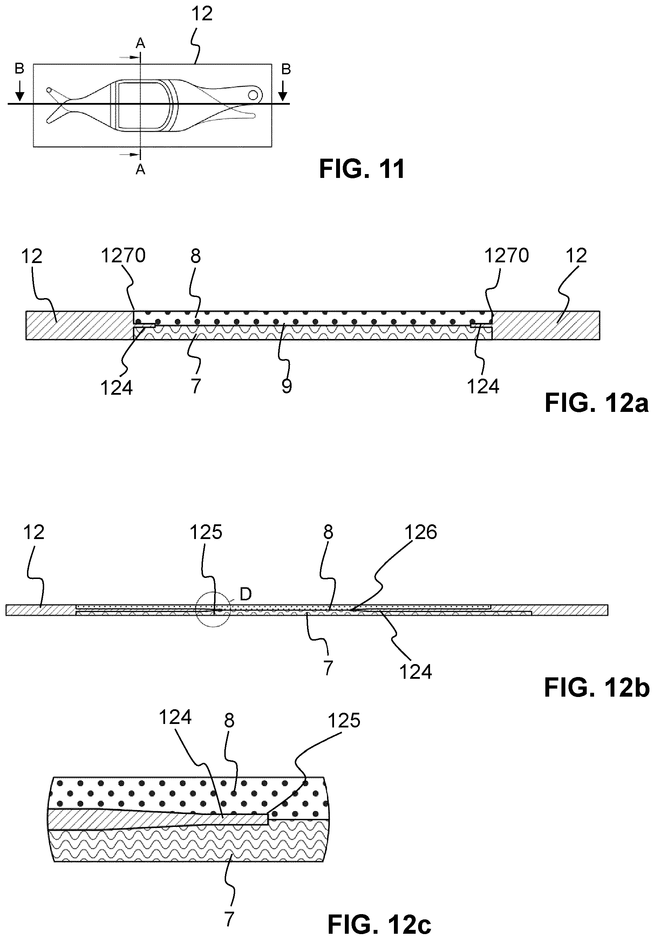

When flowing along the interface window 127, the bottom phase 7 and the top phase 8 contact each other and form the liquid interface 9 as mentioned above with reference to figures 1 to 6. The liquid interface 9 within the interface window 127 can be seen in figure 12a. Since the flow channel plate 12 is stacked together with the top plate 10 and the bottom plate 11, the interface window 127 is aligned with the top electrode 114 and the bottom electrode 115, as can be seen in figure 10. This part therefore forms the reactive region of the battery.

When the three plates 10, 11, 12 are stacked together, the plates 10, 11, 12 lay one above the other, defining the main flow direction for the fluids in horizontal direction. Thereby, the bottom phase inlet 122 is aligned with the bottom phase entrance 112, the top phase inlet 123 is aligned with the top phase entrance 113, the bottom phase outlet 120 is aligned with the bottom phase exit 110 and the top phase outlet 121 is aligned with the top phase exit 111, as can be seen in figure 10.

The interface window 127 is surrounded by a pinning structure, here a lip 124, extending into the interface window 127. The interface window 127 comprises a circumferential inner wall 1270 onto which the lip 124 is integrally formed. The lip 124 can best seen in figures 7 and 12a and 12b. It is preferably integrally molded onto the plate 12 in one piece. The lip 124 is preferably stiff. It is formed by a tapering of the thickness or a step in the thickness of the flow channel plate 12, wherein the tapering or step preferably occurs in equal measure on the upper side and the bottom side of the flow channel plate 12. In figure 12a, a step is present.

The lip 124 and therefore the thickness reduction is present around the entire inner circumference of the interface window 127. This can be seen in figures 12a and 12b. preferably, the cross-section, the size and the shape of the lip 124 remains the same around the entire circumference of the interface window 127. Preferably, its vertical position within the plate 12, and therefore its location on the circumferential wall of the interface window 127 remains the same. On its upstream end, the interface window 127 preferably forms a straight line extending, i.e. running, perpendicular to the main flow direction. This part is called lip opening and marked with reference number 125. On its downstream end, the interface opening 127 is preferably rounded with the longest region being in the middle part of the plate. This end is called lip closure, and it is marked with reference number 126. The borders of the interface window 127 extending in the main flow direction and connecting the lip opening 125 with the lip closure 126 run preferably parallel to the main flow direction and they are preferably straight. The interface window 127 therefore has a rectangular shape with one side being bent outwards.

The upper and lower channel for the bottom and top phase 7, 8 have, in the region of the interface window 127, the same size and shape as the interface window 127.

As can be seen in figures 12b and 12c, the lip opening 125 formed by the lip 124 extends more into the interface window 127 than the parts of the lip 124 located at the two opposite sides of the lip 124 extending parallel to the flow direction. The lip closing 126 also extends more into the interface window 127 than the side parts of the lip 124. The lip opening 125 and the lip closing 126 can have the same length or different lengths. Preferably, at least one of them or both taper towards their free end, as can be seen at the example of the lip opening 125 in figure 12c.

The electrolytes entering the cell through the entrances 112, 113 and the inlets 122, 123 are first guided in the flow channel plate 12 separated from each other. The electrolyte forming the bottom phase 7 is guided in the bottom recess on the bottom side of the flow channel plate 12 and the electrolyte forming the top phase 8 is guided in the upper recess on the top side of the flow channel plate 12. Both phases 7, 8 flow in the same horizontal direction.

When reaching the lip opening 125 at the upstream end of the interface window 127, the lip 124 surrounding the interface window 127 guides the flow of both phases 7, 8, thereby ensuring a horizontal, undisturbed separation line, i.e. the liquid interface 9, between the bottom phase 7 and the top phase 8. The lip 124 ensures that the liquid interface 9 between the two phases 7, 8 is kept straight.

As can be seen in figure 10b, different wetting behaviors of the bottom phase 7 and the top phase 8 on the cell walls of a reaction chamber leads to a curved liquid interface when the two electrolyte phases 7, 8 float on top of each other in the confined volume of the reaction chamber. Introducing a lip 124 as described in this text and shown in figure 10c leads to pinning of the liquid interface, thereby enabling a flat interface despite the different wetting behaviors. This applies for static phases as well as for flowing phases.

At the lip closure 126 at the downstream end of the interface window, the lip 124 ensures the separation of the two flows, guiding the bottom phase 7 to its recess at the bottom side of the flow channel plate 12 and guiding the top phase 8 to its recess at the upper side of the flow channel plate 12. The lip 124 therefore ensures an inline separation in the cell, for the incoming fluids as well as for the leaving fluids, i.e. the two electrolytes are separated by the fluid channel plate 12 when passing the plate except when passing the interface window 127. For some applications, this inline separation is sufficient, and the electrolytes having passed the cell can be recirculated in the battery. In other embodiments, a separation tank 2 with a mid phase 90 is present, which additionally separates the two electrolytes having passed the cell, prior to recirculate the two electrolytes in the battery.

As can be seen in figures 7, 8 and 9 and when considering the longitudinal middle axis A of the flow channel plate 12, which runs in the same direction as the main flow of the two electrolytes, the bottom phase 7 is starting on one half lying of the plate 12 above the middle axis A and ending on the other half of the plate 12 below the middle axis A. The top phase 8 starts on the other half, i.e. below the middle axis A, and ends also on the other half than the bottom phase 7, i.e. above the middle axis A. In other embodiments, the start and end are on the same side with regard to the middle axis.

In an alternative embodiment, the entrances 112, 113 are located in the bottom plate 11 and the exits 110, 111 are located in the top plate 10. The shape of the recesses of the flow channel plate 12 remains the same, wherein there through-openings are changed in accordance with the placement of the entrances 112, 113 and exits 110, 111 within the top and the bottom plate 10, 11.

The reaction chamber, i.e. the cell, according to figures 7 to 14 can be used redox flow batteries working with horizontally flowing electrolyte phases. Especially, this cell is suitable for using in the batteries shown and described with reference to figures 1 to 6. The cell is arranged within a housing or the plates 10, 11, 12 are secured and sealed together in another well-known way. Tubes are connected to the entrances 112, 113 and to the exits 110, 111 in order to enable a flow of two electrolytes through the cell. The tubes or tubing for the exits 110, 111 are marked in figures 7 to 14 with reference numbers 5 and 6. These tubes 5, 6 are actually connected to the exits 110, 111 provided in the bottom plate 11, despite that in figures 7 to 14 only the outlets 120, 121 are marked with a reference number.

Preferably, pumps are arranged on the outlet side and/or at the inlet side of the reaction chamber, enabling a constant flow through the reaction chamber.

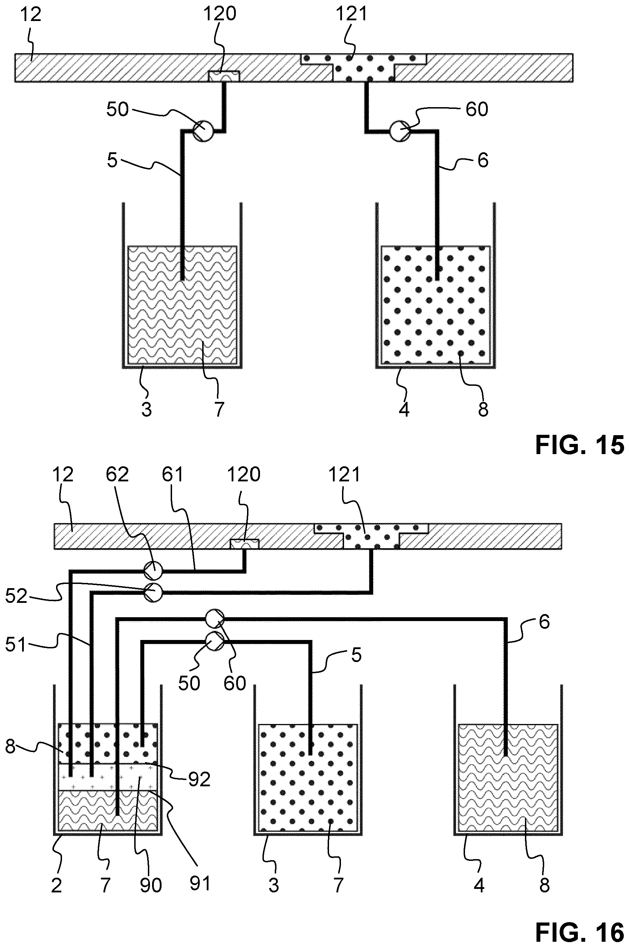

Figure 15 shows a further application of the cell of figures 7 to 14. Only the flow channel plate 12 of the cell is shown. It is understood that the flow channel plate 12 is arranged in a sealed manner between the top plate 10 and the bottom plate 11, even if they are not shown in figure 15. The tubes 5, 6 are connected with the bottom phase outlet 120 and the top phase outlet 121. As mentioned before, the tubes 5, 6 are connected with the exits 110, 111 of the bottom plate 11. Pumps 50, 60 are preferably present in the outlet tube 5, 6. In this embodiment, no separation tank 2 is present. The bottom phase 7 and the top phase 8 are directly released from the reaction chamber into the first collection tank 3 for the bottom phase 7 and the second collection tank 4 for the top phase 8. This embodiment is preferably used, when only one flow channel plate 12 is located between the top plate 10 and the bottom plate 11. The battery may still comprise a multiple of individual reaction chambers, each comprising only one single flow channel plate 12. The reaction chambers may be arranged parallel to each other or in series. According to the invention claimed, the separation tank 2 comprising the mid phase is present between the outlets of the reaction chamber and the two collection tanks 3, 4. The other parts of the description referring to figure 15 apply as well in case the separation tank 2 is present.

Figure 16 shows schematically the application of the cell according to figures 7 to 14 with the separation tank 2. Such applications are described already referring to figures 1 to 6. Other variants of this application are possible as well. A tube 51 connected to the bottom phase exit 110 of the bottom plate 11 (not shown) and therefore connected with the bottom phase outlet 120 of the flow channel plate 12 leads to the mid phase 90 within the separation tank 2. A second pump 52 is located in this line. A tube 61 connected to the top phase exit 111 of the bottom plate 11 (not shown) and therefore connected with the top phase outlet 121 of the flow channel plate 12 leads also to the mid phase 90 within the separation tank 2. A second pump 62 is located in this line. As described when referring to figures 3 to 6, the bottom phase 7 and the top phase 8 are separated within the separation tank 2 and led through the tubes 5 and 6, preferably with help by the pumps 50, 60, into their respective collection tanks 3, 4. This embodiment is preferably used, when a multiple of flow channel plates 12 are located between one single top plate 10 and one single bottom plate 11, i.e. when the cells are stacked. The battery may still comprise a multiple of individual reaction chambers, each comprising a multiple of stacked flow channel plates 12. The reaction chambers may be arranged parallel to each other or in series.

A variant not shown in the drawings, a combination of the arrangements of figures 15 and 16 is used. The two phases 7, 8 leaving the at least one cells are forwarded to their respective collection tank 3, 4. Since the at least one cell may not separate the phases sufficiently, the two collection tanks 3, 4 comprise an immiscible mid phase which separates the minor amount of the electrolyte phase within each collection tank. I.e. each of the two collection tanks is used as a separations tank. The minor amount or the main amount of the electrolyte phase within each collection tank is pumped into a pure collection tank, now containing only one of the two phases. In another embodiment, the two collection tanks 3, 4 acting as separator tanks might not contain a third phase.

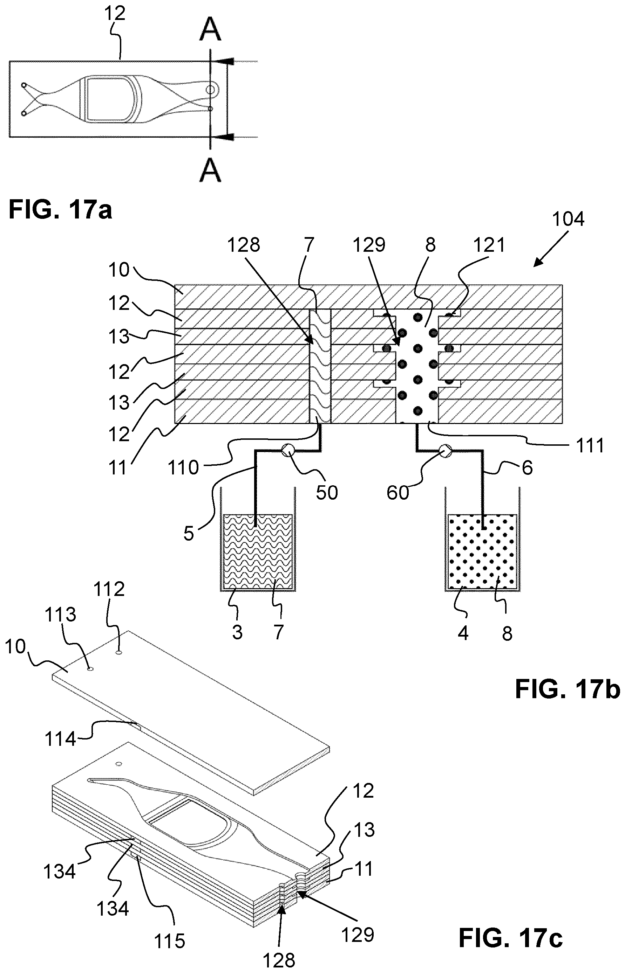

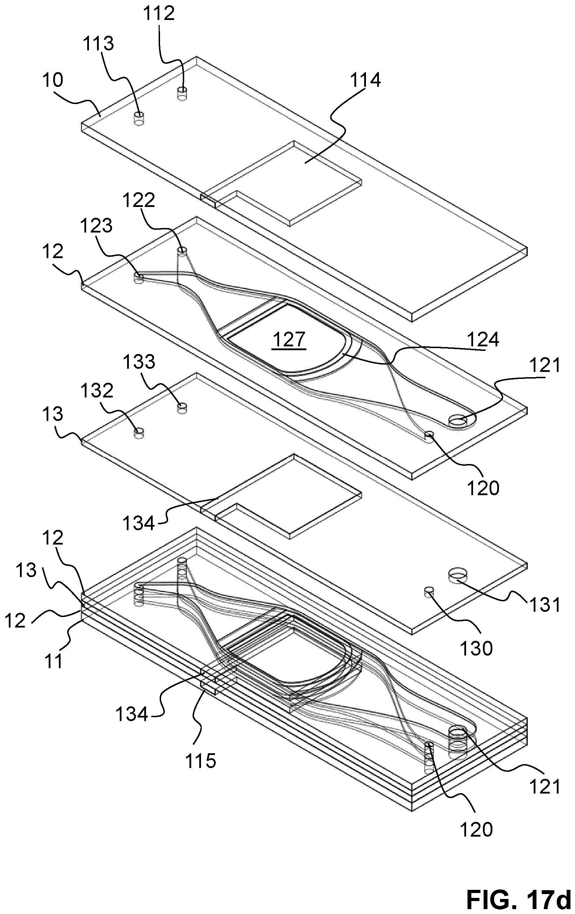

The cell as described in figures 7 to 14 can easily be multiplied in a stack of cells, wherein the stack forms the reaction chamber. Such a reaction chamber 104 with stacked cells is shown in figures 5 and 6 as well as in figures 17a to 17d. Between the top plate 10 and the bottom plate 11, not only one single flow channel plate 12 is placed, but two or more flow channel plates 12 can be placed. Between the flow channel plates 12, the mid plates 13 are placed. The mid plates 13 have flat and plane top and bottom surfaces like the top plate 10 and the bottom plate 11. It is preferably plane-parallel as well. They also comprise an electrode 134 referred to as bipolar electrode which is in contact with the bottom phase on its upper side and with the top phase on its lower side. In other embodiments, the mid plates 13 are made completely out the electrode material. The mid plates 13 comprise first, second, third and fourth through-openings aligning with the entrances and exits of the top and bottom plate 10, 11. The first through openings are bottom phase outlet through-openings 130 which form together with the bottom phase outlets 120 of the flow channel plates 120 a bottom phase outlet column 128. The second through-openings are top phase outlet through-openings 131 which form together with the top phase outlets 121 of the flow channel plates 12 a top phase outlet column 129. Likewise, the third and fourth through-openings are bottom phase inlet through-openings 132 and top phase inlet through-openings 133 forming a bottom phase inlet column and a top phase inlet column respectively (see figure 17d). The inlet columns enable supply of the two electrolytes from a main entrance of the cell into all flow channel plates 12 and the outlet columns 128, 129 equally enable delivering the phases 7, 8 from the flow channel plates 12 to a main exit of the cell. In Figure 17a, the top phase 8 and the bottom phase 7 are let through tubes 5, 6 into separate collection tanks 3, 7. According to the invention claimed, a separation tank 2 comprising a mid phase is present between the outlets of the reaction chamber and the two collection tanks 3, 4. The other parts of the description referring to figures 17a to 17d apply as well in case the separation tank is present.

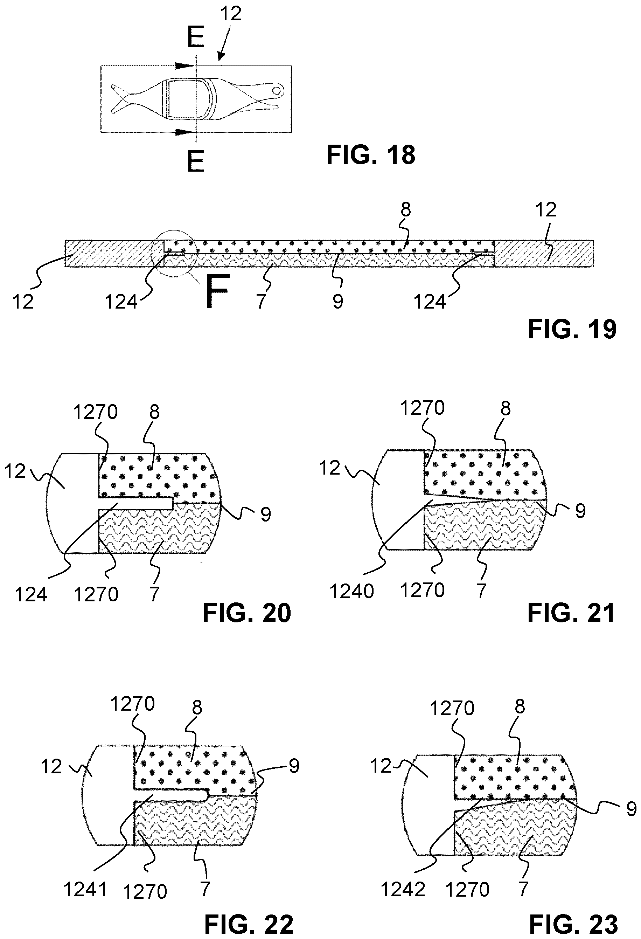

The lip 124 described above is in figures 19 and 20 again. Figure 19 is a cross-sectional view along line E-E of figure 18. Figure 20 is an enlarged view of a part of figure 19. As can be seen in figure 20, the lip 124 has a rectangular cross-section and an abrupt free end.

Figures 21 to 23 show three variants of the shape of the lip 124. In figure 21, the lip 1240 has a cross-section of an isosceles triangle, ending in a pointed tip. An isosceles triangle has two side with the identical length and one side with another length. In figure 22, the lip 1241 has a rectangular cross-section wherein the end is not straight but vaulted to the outside. In figure 23, the lip 1242 has a cross-section of a triangle with a pointed tip, wherein all side of the triangle have different lengths. Preferably the upper side of the triangle runs in horizontal direction. It is therefore on the high of the bottom of the recess guiding the incoming top phase 8, so that the top phase 8 is not lowered when entering the interface window 127. Only the bottom phase 7 is raised at the entrance of the interface window 127.

In other embodiments not shown in the drawings, the liquid interface 9 is lowered or raised at the edges of the interface window 127 by using other shapes and arrangement of the lip 124 as well as its position on the plate 12. In addition, the lip 124 may extend with its upper and lower surface in a not symmetrical way relative to the bottoms of the recesses. In addition, the level of the interface can be regulated along the entire interface window 127 by regulating the ratio of the flow rates of the top phase and bottom phase in the cell. For a given position and shape of the lip 124, a higher flow rate of the top phase will cause the interface level to move downwards in the center of the interface window 127 while remaining pinned at the lip along the edges of the interface window.

The stack of top plate 10, at least one flow channel plate 12, possibly at least one mid plate 13 and the bottom plate 11 can be sealed to the outside and between the plates in known ways. For example, the sealing can be achieved by using glue between the plates and in the glue channel; alternatively, the sealing can be obtained by positioning a rubber within the glue channel and mechanically clamping the top plate 10 with the channel plate 12 and with the bottom plate 11.

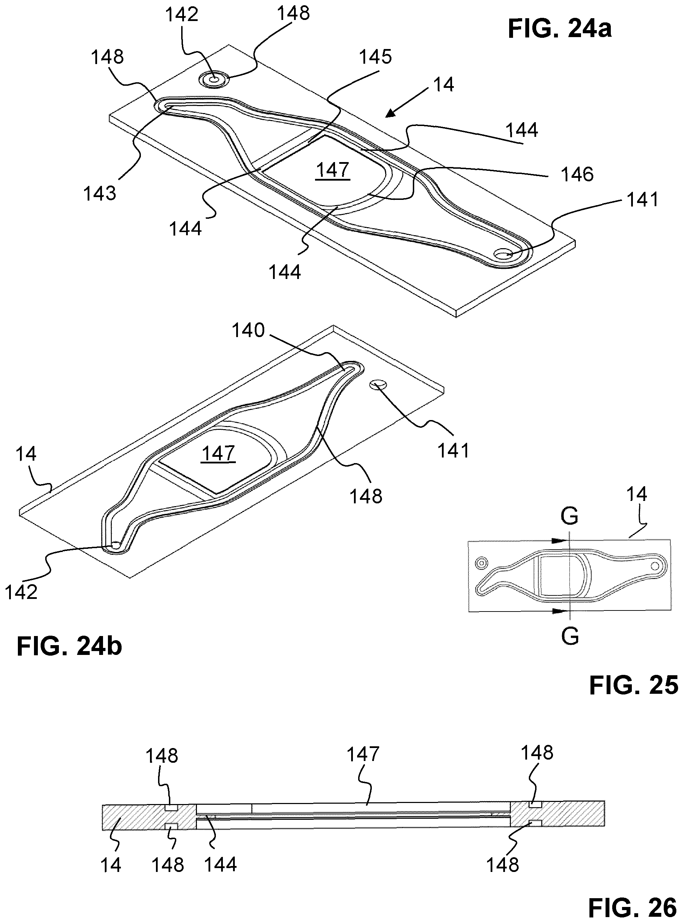

A preferred embodiment is shown in figures 24a to 26. Figures 24a and 14b show a flow channel plate 14 which differs from the flow channel plate 12 described above only by some glue channels 148. The bottom phase outlet 140, the top phase outlet 141, the bottom phase inlet 142, the top phase inlet 143, the lip 144, the lip opening 145, the lip closure 146 and the interface window 147, and the location and shape of the recesses for receiving the bottom and the top phase 7, 8 are the same as described above.

A glue channel 148 is arranged around each region to be sealed. In figure 24, the glue channel 148 around the bottom phase inlet 142 is shown and around the recess receiving the bottom phase 8, wherein this recess also includes the top phase outlet 141. Figure 26, which is a cross-sectional view along line G-G of figure 25, shows the glue channel 148 encircling the recess and therefore the interface window.

The recess for receiving the bottom phase 7 and the opening of the top phase outlet 141 on the bottom side of the flow channel plate 12 are encircled with corresponding glue channels 148, which is not shown in the figures.

The top plate 10, the bottom plate 11 and the mid plate 13 may comprise glue channels as well.

The glue channels 148 are formed by further recesses withing the upper and bottom side of the flow channel plate 12. During the manufacturing process of the reaction chambers, the glue channels 148 are filled with glue and the plates 10, 11, 12, 13 are glued together.

The flow channel plate 14 as shown in figures 24 to 26 can be used instead of the flow channel plate 12 as shown in figures 7 to 14 in all applications and embodiments described in this text.

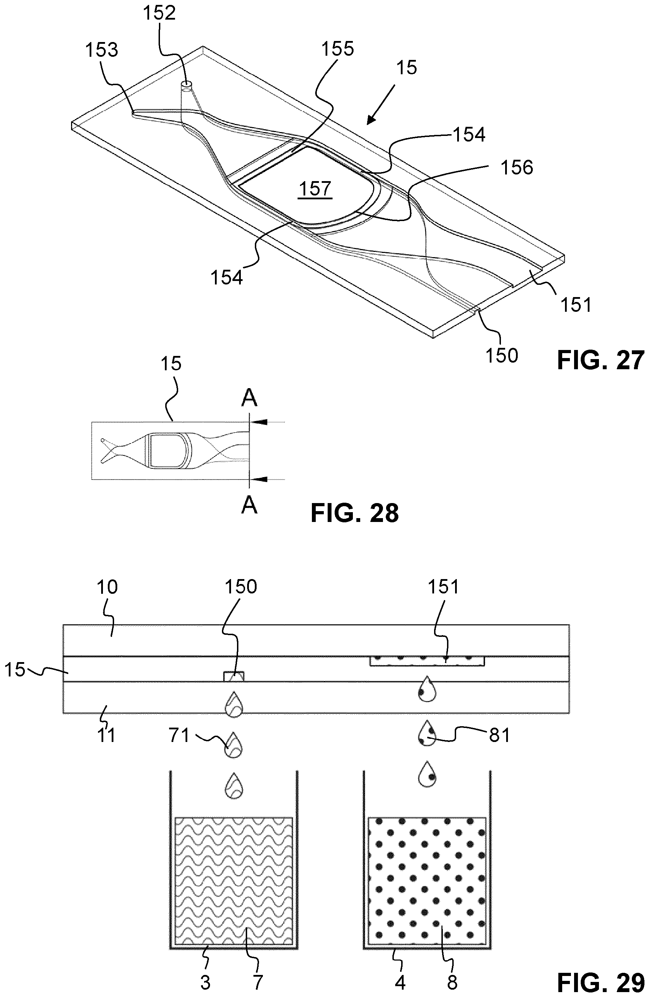

Figures 27 to 29 show a further embodiment of a flow channel plate 15, which can also be used in all applications and embodiments described in this text. The flow channel plate 15 of figures 26 to 29 may also comprise the glue channels as well.

As shown in figure 27, the flow channel plate 15 differs from the one described with reference to figures 7 to 14 in that the outlets 150, 151 of the bottom and top phases 7, 8 are formed within a narrow end face of the flow channel plate 15. The recesses of the bottom phase 7 and the top phase 8 just end free and the phases 7, 8 can flow over the edge of the flow channel plate 12. The recess at the top phase outlet 151 is broader than the recess at the bottom phase outlet 150 for the same reason as in the embodiment according to figures 7 to 14.

The bottom phase inlet 152, the top phase inlet 153, the lip 154, the lip opening 155, the lip closure 156, the interface window 157, and the location and shape of the recesses for receiving the bottom and the top phase 7, 8 are the same as described above.

In figure 29, which is a front view in direction of line A-A of figure 28, an application of this flow channel plate 15 is shown. The flow channel plate 15 is arranged between the top plate 10 and the bottom plate 11 in a sealed manner. The bottom phase 7 can drip directly from the bottom phase outlet 150 into the first collection tank 3, which is shown with bottom phase drops 71. The top phase 8 can drip directly from the top phase outlet 151 into the second collection tank 4, which is shown with top phase drops 81. According to the invention claimed, the separation tank 2 comprising the mid phase is present between the outlets of the reaction chamber and the two tanks 3, 7. The other parts of the description referring to figure 29 apply as well in case the separation tank 2 is present.

In other embodiments not shown in the drawings, a cell formed by the channel plate 15 sealed with the top plate 10 and the bottom plate 11 can be multiplied to form a stack, similar to those shown in Figures 17, 5, and 6. At the exits of the plate 15, the top phase 8 and bottom phase 7 drip downward along vertical paths into the collection tanks 3 and 4. Alternatively, the collection tanks can be arranged as shown in Figures 15 and 16. The two phases 7 and 8 dripping out from at least one cell reach their respective collection tanks 3 and 4. Since at least one cell may not separate the phases sufficiently, the two collection tanks 3 and 4 may contain an immiscible mid phase to facilitate the separation of minor amounts of electrolyte within each tank. In this arrangement, each of the two collection tanks serves as a separation tank. The minor or major amount of electrolyte phase within each collection tank is then pumped into a dedicated collection tank, resulting in tanks containing only one of the two phases. In another embodiment, the two collection tanks 3 and 4 acting as separator tanks might not contain the third phase.

The embodiment according to figure 27 is also especially suitable when located in direct connection with a separation tank 2, for example as shown in figures 6 and 7. In addition, the embodiment according to Figure 28 is particularly suitable when the pressure at the exit must remain constant and independent of any additional fluidic connection placed downstream. This is contrary to the cases illustrated in Figures 1 to 6, where the pressure at the exits is influenced by the height of the liquid in the separation tank 2, and the cases illustrated in Figures 15 and 16, where the exit pressure depends on the arrangement of tubes 5, 6, 61, and 51, as well as the characteristics of the flow imposed by the pumps 50, 60, 62, and 52.

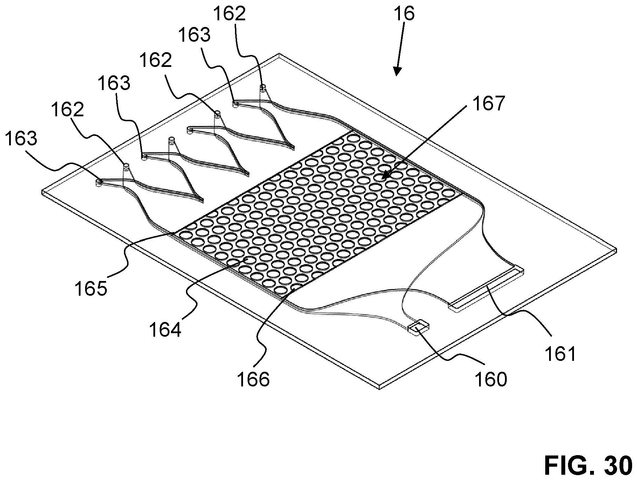

Figure 30 shows a further embodiment of the flow channel plate 16. It differs from the other flow channel plates in that if comprises more than one bottom phase inlets 162 and more than one top phase inlets 163. This example shows four of each inlet 162, 163. However, the number of inlets 162, 163 can also be two, three, five or more. The inlets 162, 163 are arranged at first ends of the bottom side and the upper side recess. The bottom phase inlets 162 led into one common bottom recess, and the top phase inlets 163 lead into one common upper recess.

The flow channel plate 16 comprises one single bottom phase outlet 160 and one single top phase outlet 161. The top phase outlet 161 has preferably the greater cross-sectional area than the bottom phase outlet 160. The outlets can end within the main body of the flow channel plate 16 as shown in figure 30 or they can end at a front face of the plate as shown in figure 27.

The flow channel plate 16 comprise the through-opening forming the interface window 167 as well. The window 167 can comprise a surrounding lip as described with reference to the embodiments mentioned above. In the example shown in figure 30 however, the pinning structure is formed by a grid 164 arranged within the interface window 167. This grid 164 pins the bottom phase 7 and the top phase 8 of the two electrolytes flowing on the lower and the upper side of the plate 16. The description of the other embodiments applies for this embodiment as well. The reaction chamber comprising this plate 16 may comprise the top plate 10 and the bottom plate 11 as well. It may be stackable, for example by using the middle plates 13. It may also comprise the glue channels as described above. The grid 164 comprises openings which allow a liquid interface between the bottom phase 7 and the top phase. The shape of the openings can be round as shown in this embodiment. The form of the openings can also be different. Preferably, the open area of the grid is at least half of the aera of the through-opening, i.e. the interface window.

In addition, the other embodiments described in this text or shown in the drawings may comprise instead or in addition to the lip the grid mentioned above. In addition, each of the flow channel plates and the corresponding top plates, bottom plates and mid plates, if present, described herein may comprise more than one bottom phase inlet or entrance and/or more than one top phase inlet or entrance and/or than one bottom phase outlet or exit and more than one top phase outlet or exit.

The size, dimensions and proportions of the plates and the other components shown are just exemplary. They may be different, especially when scaled up.

The battery according to the invention can be scaled up for commercial use.

### LIST OF REFERENCE SIGNS

- 100, 101, 102, 103, 104: reaction chamber
- 10: top plate
- 11: bottom plate
- 110: bottom phase exit
- 111: top phase exit
- 112: bottom phase entrance
- 113: top phase entrance
- 114: top electrode
- 115: bottom electrode
- 12: flow channel plate
- 120: bottom phase outlet
- 121: top phase outlet
- 122: bottom phase inlet
- 123: top phase inlet
- 124: lip
- 125: lip opening
- 126: lip closure
- 127: interface window
- 1270: wall
- 128: bottom phase outlet distribution column
- 129: top phase outlet distribution column
- 13: mid plate
- 130: bottom phase outlet through-opening
- 131: top phase outlet through-opening
- 132: bottom phase inlet through-opening
- 133: top phase inlet through-opening
- 134: bipolar electrode
- 14: flow channel plate
- 140: bottom phase outlet
- 141: top phase outlet
- 142: bottom phase inlet
- 143: top phase inlet
- 144: lip
- 145: lip opening
- 146: lip closure
- 147: interface window
- 148: glue channel
- 15: flow channel plate
- 150: bottom phase outlet
- 151: top phase outlet
- 152: bottom phase inlet
- 153: top phase inlet
- 154: lip
- 155: lip opening
- 156: lip closure
- 157: interface window
- 16: flow channel plate
- 160: bottom phase outlet
- 161: top phase outlet
- 162: bottom phase inlet
- 163: top phase inlet
- 164: grid
- 165: pinning structure opening
- 166: pinning structure closure
- 167: interface window
- 2: separation tank
- 3: first collection tank
- 4: second collection tank
- 5: first tubing
- 50: first pump
- 51: tube
- 52: third pump
- 6: second tubing
- 60: second pump
- 61: tube
- 62: fourth pump
- 7: bottom phase
- 70: bottom phase bubble
- 71: bottom phase drop
- 8: top phase
- 80: top phase bubble
- 81: top phase drop
- 9: liquid interface
- 90: mid phase
- 91: first liquid interface
- 92: second liquid interface
- A: longitudinal middle axis
- F: main flow direction

## Claims

1. A membrane-less redox flow battery comprising a reaction chamber, a first electrolyte and a second electrolyte, and at least one tank
wherein the first electrolyte and the second electrolyte are immiscible with each other,
wherein the first electrolyte has a first density, and the second electrolyte has a second density, wherein the first density is higher than the second density,
wherein the first electrolyte forms a bottom phase within the reaction chamber and the second electrolyte forms a top phase within the reaction chamber,
wherein the top phase lies on top of the bottom phase, the top phase and the bottom phase forming a liquid interface between them, and the top phase and the bottom phase flowing in horizontal direction through the reaction chamber,
wherein the reaction chamber comprises at least one outlet through which the bottom phase and the top phase can exit the reaction chamber and enter the tank,
**characterized**
**in that** the tank is a separation tank for separating the bottom phase from the top phase by gravity.

2. The battery of claim 1 wherein the separation tank comprises a fluid which is immiscible with the first electrolyte and the second electrolyte, and which has a density which is between the first and the second density, the fluid forming a mid-phase between the first electrolyte and the second electrolyte flowing into the tank, thereby separating the bottom phase and the top phase.

3. The battery of either one of claims 1 and 2 wherein the reaction chamber is connected to the separation tank directly or by tubing.

4. The battery of any one of claims 1 to 3 wherein the reaction chamber comprises at least one bottom phase outlet for the bottom phase and at least one top phase outlet for the top phase, the at least one bottom phase outlet and the at least one top phase outlet leading into the separation tank.

5. The battery of claim 4 wherein the reaction chamber is connected to the separation tank enabling the bottom phase and the top phase to drip without tubing directly from the bottom phase outlet and the top phase outlet respectively into the separation tank.

6. The battery of either one of claims 4 and 5 wherein the at least one bottom phase outlet and the at least one top phase outlet are arranged on the same side of the reaction chamber.

7. The battery of any one of claims 4 to 6 wherein the reaction chamber comprises a separator, preferably a lip, located upstream of the at least one bottom phase outlet and the at least one top phase outlet and separating the bottom phase and the top phase flowing through the reaction chamber.

8. The battery of any one of claims 1 to 7 wherein the bottom phase and the top phase flow in the same direction within the reaction chamber.

9. The battery of any one of claims 1 to 8 wherein the battery comprises a first collection tank for the bottom phase and a second collection tank for the top phase, wherein each is connected with the separation tank via a separate tubing.

10. The battery of any one of claims 1 to 9 wherein the reaction chamber enables a laminar flow of the bottom phase and the top phase flowing through the reaction chamber.

11. The battery of any one of claims 1 to 10 wherein the reaction chamber comprises at least one flow channel plate enabling a laminar flow of the bottom phase and the top phase through the reaction chamber.

12. The battery of claims 7 and 11 wherein the at least one flow channel plate comprises the separator.

13. The battery of either one of claims 7 and 12 wherein at least two flow channel plates are stacked on top of each other, wherein a mid plate is arranged between them and wherein a top plate is arranged on the top of the stack and a bottom plate is arranged at the bottom of the stack.

14. The battery of any one claims 1 to 13 wherein the battery comprises a first tube with a first tube end arranged in a bottom region of the separation tank and a second tube arranged in a bottom region of the separation tank.

15. A method for operating the battery according to one of claims 1 to 14 wherein the method comprises the steps of
- introducing the first electrolyte into the reaction chamber through a first inlet,
- introducing the second electrolyte into the reaction chamber through a second inlet,
- letting the bottom phase formed by the first electrolyte and the top phase formed by the second electrolyte flowing in horizontal direction through the reaction chamber,
- letting the bottom phase and the top phase flow or drip out of the reaction chamber through the at least one outlet into the separation tank and
- separating the bottom phase and the top phase within the separation tank using gravity.
